# EUROPEAN PATENT APPLICATION

(11) **EP 4 620 360 A1**
(43) Date of publication of application: **24.09.2025**
(21) Application number: 24186622.7
(22) Date of filing: 04.07.2024
(51) Int. Cl.: A47J 31/52, A47J 31/60

(54) **METHOD AND SYSTEM FOR CONFIGURING A RINSE FUNCTION OF A BEVERAGE MACHINE**

(30) Priority: 21.03.2024 EP 24165263
(71) Applicant: Versuni Holding B.V., 1082 MD Amsterdam (NL)
(72) Inventor: SINNEMA, Anke Gerda, 1082 MD Amsterdam (NL)
(74) Representative: Vollering, Stefanus Franciscus Maria

(57) **Abstract**

Provided is a beverage machine (10), such as a coffee machine, comprising a liquid dispensing assembly (23) having liquid contacting part(s) which are contactable by a rinsing liquid during a rinse function of the beverage machine (10). The beverage machine (10) comprises a controller (28) configured to obtain (102) user behavior data relevant to one or more initial beverage making actions performed by user(s) to prepare one or more initial beverages, and to configure (104) a subsequent automated rinse function included in a subsequent automated sequence of the beverage machine (10) based on the user behavior data. Further provided is a method and related computer program for configuring a rinse function of a beverage machine (10).

## Description

### FIELD OF THE INVENTION

The invention relates to a method, and a related computer program, for configuring a rinse function of a beverage machine, e.g. for cleaning and/or heating liquid-contacting parts of a liquid dispensing assembly of the beverage machine.

The invention further relates to a beverage machine comprising such a liquid dispensing assembly and a controller for configuring such a rinse function.

### BACKGROUND OF THE INVENTION

Various beverage machines are known that have a rinse function, in which a rinsing liquid, e.g. water, is pumped through various parts of the beverage machine. Often, the rinse function is utilized for cleaning and/or heating purposes.

Taking the example of a coffee machine, such a rinse function is sometimes employed upon startup to rinse the machine with hot water before use, e.g. before preparing a hot coffee. In this way the machine may be heated and any cold water which was sitting in the tubes may be removed before preparing a beverage, thereby ensuring that a subsequently prepared beverage achieves a target in-cup temperature.

A rinse function is also sometimes employed upon shutdown of the machine, e.g. after a beverage has been prepared. For example, upon shutdown the machine may be rinsed with hot or cold water to clean it by removing residue from previously prepared beverages.

Sometimes, the rinse function may be implemented automatically in response to a particular event of the beverage machine. For example, the above-described startup rinse may be implemented automatically when the machine is turned on. As another example, the shutdown rinse may be implemented automatically when the machine is turned off. This approach provides an enhanced user experience when compared to a rinse function which must be implemented manually by the user.

In some beverage machines, the rinse function will be set to implement a rinse each time a particular event occurs, regardless of whether a rinse is actually required, e.g. every time the machine is switched on or off, or every time a beverage is prepared.

Implementing a rinse function in this way may have certain advantages but may not be ideal for the way the beverage machine is used. For example, in the case of a beverage machine which is switched on or off multiple times throughout a day, it may not be necessary to rinse the beverage machine every time the machine is switched on or off to ensure an acceptable level of machine hygiene.

Alternatively, the rinse function may be set to be implemented less frequently, e.g. to rinse every other time the machine is switched on or off. This may result in lower energy and/or water consumption, however, it may result in unsatisfactory machine cleanliness and/or beverage quality.

### SUMMARY OF THE INVENTION

It would be desirable to provide a simple way of configuring the rinse function of a beverage machine, to provide an enhanced rinse function. For example, it may be desirable to provide a simple way of configuring the rinse function that helps to ensure machine cleanliness and beverage quality whilst minimizing energy and resource consumption, e.g. water consumption of the machine, and/or to minimize the burden placed on the user.

The invention is defined by the claims.

According to examples in accordance with an aspect of the invention, there is provided a method for configuring a rinse function of a beverage machine, the rinse function rinsing liquid-contacting part(s) of the beverage machine using a rinsing liquid, the method comprising: obtaining user behavior data relevant to one or more initial beverage-making actions performed by user(s) to prepare one or more initial beverages; and configuring, based on the user behavior data, a subsequent automated rinse function included in a subsequent automated sequence of the beverage machine, the subsequent automated sequence being implemented subsequently to the preparation of each of said one or more initial beverages, the subsequent automated sequence comprising a beverage machine operation in addition to said subsequent automated rinse function.

By the subsequent automated rinse function being configured based on the user behavior data gathered via the user's/users' previous beverage-making action(s) when preparing initial beverage(s), the configuration of the subsequent automated rinse function may be better aligned with rinsing requirements of the beverage machine, resulting in an enhanced rinse function.

Previous use of the beverage machine, for example, the user behavior data, may be indicative of how the machine will be used in the future, in other words, the user's and/or users' habits/routines/preferences. Since the rinsing requirements of the beverage machine, such as the rinse frequency, the rinse temperature, and the length of time of rinsing may vary according to how the machine is used, the user behavior data may provide an indication of how to configure the rinse function. That is, the data may provide an indication of how to configure the subsequent automated rinse function associated with the subsequent automated sequence.

The liquid-contacting part(s) may include any part of the beverage machine which contacts a liquid from which the beverage is prepared and/or the beverage itself whilst a beverage is being prepared. For example, liquid-contacting part(s) may include a beverage preparation chamber, such as a brewing chamber of a coffee machine. As another example, the liquid-contacting part(s) may include tubing used to transport the liquid, such as milk or water, from a liquid container to a beverage delivery outlet of the beverage machine.

The user behavior data may be obtained directly from previous use of the beverage machine. That is, data indicative of one or more initial beverage making actions performed by user(s) when operating the beverage machine may be utilized to configure a subsequent automated rinse function of the same beverage machine. Thus, the rinse function may be continually configured to account for changing user behavior or to further optimize the rinse function according to the user's or users' beverage machine use habits/preferences/routines. In other words, the rinse function may be re-configured if the way in which the machine is used changes.

Alternatively or additionally, the user behavior data may be obtained from previous use of one or more other beverage machines. That is, the one or more initial beverage-making actions were performed by the user(s) when operating the one or more other beverage machines.

It is noted that the subsequent beverage machine operation may comprise a user-selectable beverage machine operation and/or an automatic beverage machine operation. For example, the subsequent beverage machine operation may comprise the beverage machine switching on or off in response to a user selection and/or the beverage machine switching on or off automatically.

In some embodiments, the configuring the subsequent automated rinse function is at least partly based on a recipe of each of the one or more initial beverages, in other words, based on the recipe of each of the one or more initial beverages as indicated by the user behavior data.

In this way, the configuration of the subsequent automated rinse function may be better aligned with the rinsing requirements of the beverage machine. This is because the recipe of each of the one or more initial beverages may be indicative of future use of the beverage machine, e.g. may be used to predict the recipe(s) of one or more beverages which may be prepared using the beverage machine in the future, and therefore indicative of how to configure the subsequent automated rinse function.

Alternatively or additionally, the subsequent automated rinse function may be configured based on a most frequently prepared recipe of the one or more initial beverages.

For example, the most frequently prepared beverage recipe may be the beverage recipe which is/are prepared the most times over a fixed period, e.g. per day. As another example, the most frequently prepared beverage recipe may be the beverage recipe which is/are most frequently prepared first after startup of the beverage machine.

In this way, the rinse function may be optimized for the preferred beverage recipe of the user(s).

For example, the subsequent automated rinse function may be configured based on one or more ingredients and/or temperatures of the recipe(s).

In some embodiments the configuring the subsequent automated rinse function is at least partly based on a beverage volume of each of the one or more initial beverages, in other words, based on the beverage volume of each of the one or more initial beverages as indicated by the user behavior data.

In this way, the configuration of the subsequent automated rinse function may be better aligned with the rinsing requirements of the beverage machine. This is because the volume of each of the one or more initial beverages may be indicative of future use of the beverage machine, e.g. may be used to predict the volume(s) of one or more beverages which may be prepared using the beverage machine in the future, and therefore of how to configure the subsequent automated rinse function.

Alternatively or additionally, the subsequent automated rinse function may be configured based on a most frequently occurring beverage volume of the one or more initial beverages.

In this way, the rinse function may be optimized for a preferred beverage volume of the user(s).

For example, the most frequently occurring beverage volume may be the volume of the beverage recipe which is prepared the most times over a fixed period, e.g. per day. As another example, the most frequently occurring beverage volume may be the volume of the beverage recipe which is most often prepared first after startup of the beverage machine.

In some embodiments the configuring the subsequent automated rinse function is at least partly based on a time and/or day and/or season of preparation of each of the one or more initial beverages, in other words, based on the time and/or day and/or season of preparation of each of the one or more initial beverages as indicated by the user behavior data.

In this way, the configuration of the subsequent automated rinse function may be better aligned with the rinsing requirements of the beverage machine. This is because the time and/or day and/or season of preparation of each of the one or more initial beverages may be indicative of future use of the beverage machine, e.g. may be used to predict the time(s) and/or day(s) and/or season(s) at which one or more beverages may be prepared using the beverage machine in the future, and therefore of the rinsing requirements of the beverage machine.

Alternatively or additionally, the configuring the subsequent automated rinse function can be at least partly based on a number of initial beverages prepared during a pre-determined period of time. In this way, the rinse function may be configured to account for the frequency of use of the beverage machine and/or period(s) of use and/or non-use.

In some embodiments, the configuring the subsequent automated rinse function is at least partly based on a time at which the beverage machine switches on and/or a time at which the beverage machine switches off, in other words, based on the time at which the beverage machine switches on and/or off as indicated by the user behavior data.

In this way, the configuration of the subsequent automated rinse function may be better aligned with the rinsing requirements of the beverage machine. This is because the time at which the beverage machine is switched on and/or off when preparing the one or more initial beverages may be indicative of future use of the beverage machine, e.g. may be used to predict the time at which the beverage machine will be switched on and/or off in the future, and therefore of the rinsing requirements of the beverage machine.

In some embodiments, configuring the subsequent automated rinse function is at least partly based on a number of times the beverage machine switches on and/or switches off throughout a pre-determined period of time, in other words, based on the number of times the beverage machine switches on and/or switches off throughout a pre-determined period of time as indicated by the user behavior data.

In this way, the configuration of the subsequent automated rinse function may be better aligned with the rinsing requirements of the beverage machine. This is because the number of times, i.e. frequency, the beverage machine switches on and/or off throughout a predetermined period of time may be indicative of future use of the beverage machine, e.g. may be used to predict the number of times that the beverage machine will switch on and/or switch off during a pre-determined period of time in the future, and therefore of the rinsing requirements of the beverage machine.

In some embodiments, in addition to configuring the rinse function based on the user behavior data, the method may further comprise obtaining timer data indicative of a time elapsed since a beverage was last prepared using the beverage machine. In such embodiments, the method may further comprise rinsing the beverage machine subject to the timer data being indicative of the time elapsed exceeding a pre-determined length of time.

In some embodiments, the configuring the subsequent automated rinse function is based on indoor and/or outdoor environmental conditions relevant to the one or more initial beverage making actions, in other words, the indoor and/or outdoor environmental conditions relevant to the one or more initial beverage making actions as indicated by the user behavior data.

In this way, the configuration of the subsequent automated rinse function may be better aligned with future use of the beverage machine. This is because indoor and/or outdoor environmental conditions associated with the one or more initial beverage making actions may provide an indication of future use, and of the rinsing requirements of the beverage machine.

In some embodiments, the configuring the subsequent automated rinse function comprises one or more of: setting a flow rate of the rinsing liquid, setting a temperature of the rinsing liquid, setting a volume of the rinsing liquid used to rinse the beverage machine, setting a length of time of rinsing the beverage machine, setting a time interval between a first instance of rinsing the beverage machine and a second instance of rinsing the beverage machine, setting one or more time(s) of day of rinsing the beverage machine, skipping an automated rinse function that would otherwise be included in the subsequent automated sequence, and directing the flow of the rinsing liquid.

These techniques provide relatively straightforward ways of configuring the rinse function.

In some embodiments, the beverage machine operation comprises preparing a beverage using the beverage machine and/or changing a power status of the beverage machine.

For example, the changing of power status may comprise the beverage machine switching on or the beverage machine switching off.

In some embodiments, the subsequent automated rinse function comprises rinsing the beverage machine with heated rinsing liquid to heat the liquid-contacting part(s) and/or rinsing the beverage machine with non-heated rinsing liquid to rinse the liquid-contacting part(s).

In this way, an in-cup temperature of the beverage may be controlled and/or the beverage machine may be cleaned.

For example, the subsequent automated sequence may comprise the beverage machine switching on and rinsing the beverage machine with a heated and/or non-heated rinsing liquid.

Alternatively or additionally, the subsequent automated sequence may comprise the beverage machine switching off and rinsing the beverage machine with a heated and/or non-heated rinsing liquid.

Alternatively or additionally, the subsequent automated sequence may comprise preparing a beverage using the beverage machine and rinsing the beverage machine with a heated and/or non-heated rinsing liquid.

In some embodiments, the method further comprises configuring a power saving function of the beverage machine based on the user behavior data; the power saving function automatically switching off the beverage machine.

In this way, the power saving function may be better aligned with the future use of the beverage machine. For example, the power saving function may account for periods of use and/or non-use of the beverage machine.

In some embodiments, the configuring the power saving function comprises one or more of: setting a time and/or day of automatically switching off the beverage machine, setting a time interval between preparing one or more beverages and automatically switching off the beverage machine and setting a time interval between switching on the beverage machine and automatically switching off the beverage machine.

These techniques provide relatively straightforward ways of configuring the power saving function.

In some embodiments, the configuring the power saving function is at least partly based on a total number of initial beverages prepared during a pre-determined period of time and/or the time of preparing each of the one or more initial beverages, in other words, based on the total number of initial beverages prepared during a pre-determined period of time and/or the time of preparing each of the one or more initial beverages as indicated by the user behavior data.

These metrics may provide an indication of future use of the beverage machine, and thus how to configure the power-saving function.

According to another aspect there is provided a beverage machine comprising: a liquid dispensing assembly comprising liquid-contacting part(s) contactable by rinsing liquid during a rinse function of the beverage machine and a controller configured to: obtain user behavior data relevant to one or more initial beverage-making actions performed by user(s) to prepare one or more initial beverages, and configure, based on the user behavior data, a subsequent automated rinse function included in a subsequent automated sequence of the beverage machine, the subsequent automated sequence being implemented subsequently to the preparation of each of said one or more initial beverages, the subsequent automated sequence comprising a beverage machine operation in addition to said subsequent automated rinse function.

The beverage machine may comprise a coffee machine, such as a fully automatic coffee machine.

According to another aspect there is provided a computer program comprising computer program code configured to cause a controller, when said code is executed on said controller, to execute the method according to any of the embodiments described herein.

One or more non-transitory computer readable media may be provided, which non-transitory computer readable media have a computer program stored thereon, with the computer program comprising computer program code which is configured, when the computer program is run on a controller, to cause the controller to implement the method according to any of the embodiments described herein.

More generally, embodiments described herein in relation to the beverage machine may be applicable to the method and computer program, and embodiments described herein in relation to the method and computer program may be applicable to the beverage machine.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 provides a block diagram of a beverage machine according to an example; and
FIG. 2 provides a flowchart of a method according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a beverage machine, such as a coffee machine, comprising a liquid dispensing assembly having liquid contacting part(s) which are contactable by a rinsing liquid during a rinse function of the beverage machine. The beverage machine comprises a controller configured to obtain user behavior data relevant to one or more initial beverage making actions performed by user(s) to prepare one or more initial beverages, and to configure a subsequent automated rinse function included in a subsequent automated sequence of the beverage machine based on the user behavior data. Further provided is a method and related computer program for configuring a rinse function of a beverage machine.

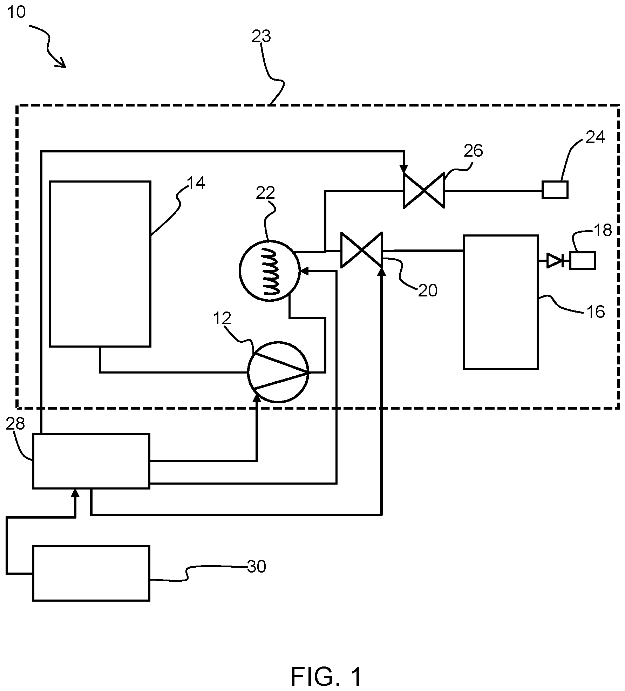

FIG. 1 provides a block diagram of a beverage machine 10 according to an example. The beverage machine 10 includes a liquid dispensing assembly 23 for dispensing liquid for preparing a beverage. To this end, the liquid dispensing assembly 23 may include a pump 12.

The pump 12 may have any suitable design. In some embodiments, the pump 12 is a vibration pump. The vibration pump comprises a pumping member and a solenoid (not visible). The solenoid is energizable, in other words activatable, to cause displacement of the pumping member. The pumping member may accordingly include a magnetic material, e.g. a ferromagnetic material.

The displacement of the pumping member, in turn, causes displacement of the liquid, e.g. water, for preparing the beverage. The vibration pump may include check valves that allow fluid displacement in only one direction.

The pumping member may have any suitable design provided that the pumping member is capable of displacing the liquid when the pumping member is caused to move by the solenoid. The pumping member may comprise, e.g. be defined by, a plunger or diaphragm.

The vibration pump may include a spring arranged to be compressed when the pumping member is caused to move by the solenoid.

In at least some embodiments, such as shown in FIG. 1, the beverage machine 10 comprises a container 14 for containing liquid, and a beverage processing chamber 16. In such embodiments, the pump 12 may be arranged to displace the liquid from the container 14 to the beverage processing chamber 16.

A beverage delivery outlet 18 may be provided downstream of the beverage processing chamber 16 for allowing the beverage to exit the beverage machine 10.

The liquid may be displaced to the beverage processing chamber 16 via a first valve 20, e.g. a first electronic valve.

The beverage machine 10 may be used to prepare various different types of beverage, such as coffee, tea, milk, drinking chocolate, e.g. hot chocolate, etc.

Various different types of raw material may thus be added to the beverage processing chamber 16 for combining with the liquid, e.g. water, supplied thereto by the pump 12.

The raw material may be added to the beverage processing chamber 16 in various ways. In some embodiments, the raw material, e.g. ground coffee, may be supplied in a pre-portioned form, such as in a capsule, pod, pad or the like.

In some embodiments, such as shown in FIG. 1, the liquid dispensing assembly 23 of the beverage machine 10 comprises a heater 22, for example a thermoblock, for heating the liquid. In such embodiments, the pump 12 may be arranged to pump the liquid to the heater 22, for instance to heat the liquid as it passes towards the beverage processing chamber 16.

Various parts of the liquid dispensing assembly 23 may be contacted by the liquid for preparing a beverage and/or the beverage itself whilst the liquid is being dispensed. In other words, the liquid dispensing assembly 23 may have liquid contacting part(s).

In some embodiments, such as that shown in FIG. 1, the beverage processing chamber 16, the pump 12, the heater 22, the valve 20, the beverage delivery outlet 18 and associated tubing may be contacted by the liquid for preparing the beverage and/or the beverage. In other words, these components may have liquid contacting part(s). It is noted that other parts of the liquid dispensing assembly 23 not shown in FIG. 1 may contact the liquid for preparing the beverage and/or the beverage itself depending on the particular configuration of the liquid dispensing assembly 23.

The beverage machine 10 may rinse the liquid contacting part(s) using a rinsing liquid, e.g. water, during a rinse function of the beverage machine 10. In other words, during the rinse function, the rinsing liquid may be pumped through the beverage machine 10 to rinse some or all of the liquid contacting part(s) of the liquid dispensing assembly 23.

In some embodiments, such as that shown in FIG. 1, the rinsing liquid, e.g. water, may be stored in the container 14. In other words, the liquid for preparing a beverage may also be used to rinse the liquid dispensing assembly 23 during the rinse function

Alternatively or additionally, the rinsing liquid may be stored in another container which is distinct from the container 14 that may be included in the liquid dispensing assembly 23. In such embodiments, the rinsing liquid may be a different liquid to the liquid used for preparing the beverage, e.g. a cleaning liquid, or may be the same liquid that is used for preparing the beverage.

In some embodiments, such as that shown in FIG. 1, the pump 12 that is included in the liquid dispensing assembly 23 may be used to pump the rinsing liquid during the rinse function.

Alternatively, the beverage machine 10 may include a dedicated rinsing pump for pumping the rinsing liquid during the rinse function.

In some embodiments, such as that shown in FIG. 1, the heater 22 that is included in the liquid dispensing assembly 23 may be used to heat the rinsing liquid during the rinse function. For example, liquid contacting part(s) of the beverage machine 10 that are downstream of the heater 22 may be rinsed with the rinsing liquid which has been heated by the heater 22.

Alternatively, the beverage machine 10 may include a dedicated heater for heating the rinsing liquid during the rinse function.

In other words, the beverage machine 10 may make use of a heater, e.g. heater 22, to selectively supply heated rinsing liquid, e.g. water, during a rinse function of the beverage machine 10.

More generally, and regardless of whether or not the heater 22 is included in the beverage machine 10, the rinse function may be selectively controlled to rinse the liquid dispensing assembly 23 with a heated or a non-heated rinsing liquid.

In some embodiments, such as that shown in FIG. 1, the rinsing liquid may be displaced/directed to the beverage processing chamber 16 during the rinse function via a valve, such as the first electronic valve 20. For example, operating, e.g. opening, the first valve 20 may enable the rinsing liquid to rinse liquid contacting part(s) of the liquid dispensing assembly 23, e.g. the beverage processing chamber 16 and beverage delivery outlet 18.

Alternatively or additionally, the beverage machine 10 may include additional valves, such as a second electronic valve 26. For example, by operating the second valve 26 the flow of the rinsing liquid may be directed to other parts liquid contacting part(s) of the of the beverage machine 10 during the rinse function, e.g. a steam wand 24.

More generally, the beverage machine 10 may include any number of valves for directing rinsing liquid to part(s) of the beverage machine 10 which are to be rinsed during the rinse function.

The above-described features of the beverage machine 10 may be employed in a rinse function which is automated, e.g. an automated rinse function of the beverage machine 10. For example, the beverage machine 10 may automatically rinse the beverage machine 10 before and/or after a beverage machine operation, in other words, in an automated sequence comprising rinsing the beverage machine 10 and a beverage machine operation. In embodiments which comprise a heater 22, such as that of FIG. 1, the automated rinse function may selectively use a heated or non-heated rinsing liquid, depending upon the requirements of the rinse function.

In a non-limiting example, the automated sequence may include the beverage machine 10 switching on and subsequently rinsing the beverage machine 10 with a heated rinsing liquid. In other words, once a user has switched on the beverage machine 10, the rinse function may be automatically implemented.

In such embodiments, the rinsing liquid may be heated using the heater 22. Rinsing the beverage machine 10 in this way may have a cleaning effect on parts of the beverage machine 10. This may also have the effect of removing cold water which was previously in the system, e.g. in the liquid dispensing assembly 23, and heating part(s) of the beverage machine 10 which are downstream of the heater 22. By heating the rinsing liquid and thereby the beverage machine 10 upon startup, in particular before preparing a beverage, heat loss from the liquid from which the beverage is prepared and/or the beverage itself may be controlled. This may assist in achieving a desired in-cup temperature of the beverage. Alternatively, such a startup rinse may use a non-heated rinsing liquid to clean the beverage machine 10, which may be desirable, for example, if the beverage machine 10 will be subsequently used to prepare a cold beverage.

In another non-limiting example, the automated sequence may include the beverage machine 10 switching off and rinsing the beverage machine 10 with a rinsing liquid. For example, once a user has selected to switch off the beverage machine 10 the rinse function may be implemented. In such embodiments the rinsing liquid may be heated or not heated by the heater 22, depending upon the rinsing requirements of the beverage machine 10. For example, the rinse function may be implemented with a heated rinsing liquid if a more thorough clean is required.

In such embodiments, the switching off of the beverage machine 10 may be as a result of a user selection to switch off the machine and/or as a result of an automatic shutdown function, for example a function of the beverage machine 10 which causes the beverage machine 10 to switch off after a pre-determined period of time or a period of non-use.

More generally, it is noted that the "switch off" terminology used throughout this document may also refer to the scenario in which the beverage machine 10 enters a "standby mode". Thus, the automated sequence may also include rinsing the beverage machine 10 and the beverage machine entering a standby mode.

In another non-limiting example, the automatic sequence may comprise preparing a beverage using the beverage machine 10 and rinsing the beverage machine 10. In such examples, the rinse function may be implemented before and/or after preparing the beverage and may employ a heated and/or non-heated rinsing liquid.

Whilst a high level of machine hygiene could be maintained by automatically rinsing the beverage machine 10 each time the beverage machine 10 switches off, this may be undesirable if the beverage machine 10 is turned on and off multiple times throughout a day, since, for example, this may result in excessive water consumption and energy use. In this case, it may be sufficient to rinse the beverage machine 10 only when the machine switches off for the final time that day.

As another example, it may be undesirable to implement the same heated startup rinse/pre-rinse each time the beverage machine 10 is turned on, since the pre-heat requirements may vary depending upon the first beverage which is prepared after startup. For example, short hot beverages, e.g. beverages with a volume less than 40ml such as espresso, may require more pre-heating than long hot beverages with a volume greater than 40ml such as latte, to achieve an acceptable in-cup temperature. Thus, for example, it may be desirable to implement a longer and/or hotter startup rinse if the first beverage prepared after startup is a short hot beverage, as compared to a long hot beverage.

An alternative approach to implementing the same rinse function regardless of use would be for the user(s) of the beverage machine 10 to set their own rinsing preferences based upon their own beverage machine 10 use habits/preferences/routines, e.g. the user may dictate how the beverage machine 10 should be rinsed. However, this would place an undue burden on the user, and may result in unsatisfactory hygiene levels and/or beverage quality.

Accordingly, it would be desirable to provide a simple way of configuring a rinse function of a beverage machine 10, in particular to ensure that the configuration of the rinse function is aligned with the way in which the beverage machine 10 is used on a day-to-day basis.

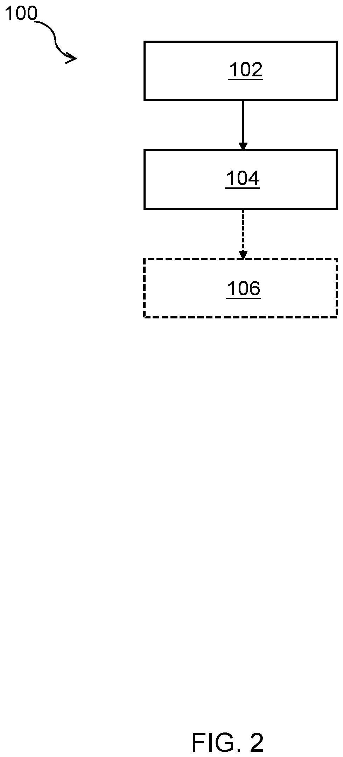

Referring to FIG. 1 and FIG. 2, the present disclosure accordingly provides a method 100 for configuring the rinse function of the liquid dispensing assembly 23 of the beverage machine 10.

The beverage machine 10 may comprise a controller 28 configured to obtain 102 user behavior data relevant to one or more initial beverage-making actions performed by user(s) to prepare one or more initial beverages, and to configure 104, based on the user behavior data, a subsequent automated rinse function included in a subsequent automated sequence of the beverage machine 10, the subsequent automated sequence being implemented subsequently to the preparation of each of said one or more initial beverages, the subsequent automated sequence comprising a beverage machine operation in addition to said subsequent automated rinse function.

Thus, the subsequent rinse function of the beverage machine 10 may be better aligned with the rinsing requirements of the beverage machine 10, resulting in an enhanced rinse function of the beverage machine 10.

In some embodiments, and referring again to FIG. 1, the beverage machine 10 may include a user interface 30 configured to receive an input from user(s) of the beverage machine 10.

The user interface 30 can be of any suitable type. In some embodiments, the user interface 30 comprises one or more buttons, a touchscreen and/or dials.

Previous use of the beverage machine 10, for example, the user behavior data, may be indicative of how the machine 10 will be used in the future, i.e. the user's and/or users' habits/routines/preferences. Since the rinsing requirements of the beverage machine 10, such as the rinse frequency, the rinse temperature, and the length of time of rinsing may vary according to how the machine 10 is used, the user behavior data may provide an indication of how to configure 104 the rinse function. In other words, the data may provide an indication of how to configure 104 the subsequent automated rinse function associated with the subsequent automated sequence.

In such embodiments, the controller 28 may be configured to obtain 102 the user behavior information directly from the user interface 30. In other words, the user behavior data may be obtained 102 directly from previous use, e.g. previous beverage making actions performed by the user(s), of the beverage machine 10. This may enable the rinse function to be better aligned with the way in which the beverage machine 10 is actually used on a day-to-day basis. This may also represent a readily implementable way of obtaining 102 such user behavior data.

Alternatively or additionally, the user behavior may be obtained 102 from a source other than the beverage machine 10. In at least some embodiments, the controller 28 may be configured to obtain 102 user behavior data relevant to one or more initial beverage making actions performed by the user(s) when operating another beverage machine which is distinct from beverage machine 10. For example, the beverage machine 10 may be a connected device, configured to obtain 102 user behavior data wirelessly from other devices connected to the same ecosystem.

Since the user behavior data may be obtained 102 directly from the beverage machine 10, e.g. via the user interface 30, or from other machines, the configuration 104 of the rinse function may be continually updated according to the user(s) behavior. For example, data relevant to each user input via the user interface, e.g. each beverage making action, may be regularly obtained 102 by the controller 28 and used by the controller to configure 104 a subsequent automated rinse function. Thus, the rinse function may be re-configured 104 if the behavior of the user(s) changes.

In some embodiments, such as that of FIG. 1, the controller 28 may be configured to control an operation of the pump(s), valve(s) and/or heater(s) of the beverage machine 10 to configure 104 the rinse function. For example, the controller 28 may control the operation of the pump 12, valves 20, 26, and/or heater 22.

In this way, the controller 28 may configure 104 the rinse function by setting a volume of the rinsing liquid used to rinse the beverage machine 10, setting a length of time of rinsing the beverage machine 10, setting a time interval between a first instance of rinsing the beverage machine 10 and a second instance of rinsing the beverage machine 10, setting one or more time(s) of day of rinsing the beverage machine 10, skipping an automated rinse function that would otherwise be included in the subsequent automated sequence and/or directing the flow of the rinsing liquid.

For example, the operation of the pump 12 may be controlled to set a volume of the rinsing liquid used to rinse the beverage machine 10, a length of time of rinsing the beverage machine 10, a time interval between a first instance of rinsing the beverage machine 10 and a second instance of rinsing the beverage machine 10, setting one or more time(s) of day of rinsing the beverage machine 10 and/or skipping an automated rinse function that would otherwise be included in an automated sequence.

It is noted any number of pumps which are included in the beverage machine 10 may be controlled in this way, depending upon the particular configuration of the beverage machine 10.

Additionally or alternatively, the controller 28 may configure 104 the rinse function by controlling the operation of the valve(s), e.g. opening and/or closing the valves, to direct and/or control the flow of the rinsing liquid. For example, the controller 28 may open or close valve 26 to direct the flow of rinsing liquid towards or away from the steam wand 24 respectively and/or to open or close valve 20 to direct the flow of rinsing liquid towards or away from the beverage preparation chamber 16 respectively.

It is noted that any number of valves included in the beverage machine 10 may be controlled in this way, depending upon the particular configuration of the beverage machine 10.

Additionally or alternatively, the controller 28 may configure 104 the rinse function by controlling the operation of the valve(s), e.g. opening and/or closing the valve(s), to set a volume of the rinsing liquid used to rinse the beverage machine 10, a length of time of rinsing the beverage machine 10, a time interval between a first instance of rinsing the beverage machine 10 and a second instance of rinsing the beverage machine 10, setting one or more time(s) of day of rinsing the beverage machine 10 and/or skipping an automated rinse function that would otherwise be included in an automated sequence.

It is noted that any number of valves included in the beverage machine 10 may be controlled in this way, depending upon the particular configuration of the beverage machine 10.

Additionally or alternatively, the controller 28 may configure 104 the rinse function by controlling operation of the heater 22, e.g. the temperature of the thermoblock, to set a temperature of the rinsing liquid.

It is noted that any number of heaters included in the beverage machine 10 may be controlled in this way, depending on the particular configuration of the beverage machine 10.

In some embodiments, the controller 28 is configured to configure 104 the subsequent automated rinse function of the beverage machine 10 at least partly based on a recipe of each of the one or more initial beverages, in other words, based on the beverage recipe of each of the one or more initial beverages as indicated by the user behavior data.

In this way, the configuration of the subsequent automated rinse function may be better aligned with the rinsing requirements of the beverage machine 10. This is because the recipe of each of the one or more initial beverages may be indicative of future use of the beverage machine 10, e.g. may be used to predict the recipe(s) of one or more beverages which may be prepared using the beverage machine 10 in the future, and therefore may be indicative of how to configure 104 the subsequent automated rinse function.

Alternatively or additionally, the subsequent automated rinse function may be configured 104 based on a most frequently occurring recipe of the one or more initial beverages.

For example, the most frequently occurring beverage recipe may be the beverage recipe which is prepared the most times over a fixed period of time, e.g. per day. As another example, the most frequently occurring beverage recipe may be the beverage recipe which is most often prepared first after startup of the beverage machine 10.

In such embodiments, the subsequent automated rinse function may be configured 104 based on one or more ingredients and/or temperatures of the recipe(s).

Generally, is noted that depending on the type, i.e. recipe(s), of the beverages which are prepared by the beverage machine 10, the rinsing requirements may vary. For example, a beverage machine 10 which is mostly used to prepare colder beverages may require more thorough rinsing upon shutdown than a beverage machine 10 which is mostly used to prepare hotter beverages, due to a greater build-up of deposits/pollution in the liquid dispensing assembly 23.

In a non-limiting illustrative example, if the obtained 102 user behavior data indicates that the beverage machine 10 is mostly used to prepare cold beverages, the controller 28 may configure 104 the rinse function to provide a more thorough, e.g. hotter and/or longer, rinse upon shutdown of the beverage machine 10 than if the beverage machine 10 were mostly used to prepared hot beverages. The user behavior data may further indicate that the beverage machine 10 is only used to prepare cold beverages during a particular period of time. In such a scenario, the controller 28 may configure 104 the rinse function to provide a more thorough rinse upon shutdown of the beverage machine 10 following this period of time.

In another non-limiting illustrative example, if the obtained 102 user behavior data indicates that a particular beverage recipe is most frequently prepared first upon startup of the machine, the rinse function may be optimized towards the rinsing requirements of that particular beverage recipe. For example, the controller 28 may set the temperature of the rinsing liquid used on startup and/or the length of time of rinsing the beverage machine 10 on startup, based on the user behavior data, to achieve a desired in-cup beverage temperature of that particular beverage by controlling operation of the pump(s), heater(s) and/or valve(s).

In another non-limiting example, if the obtained 102 user behavior data indicates that the last prepared beverage was highly polluting of the liquid dispensing assembly 23, e.g. an espresso, the rinse function may be adjusted. For example, the controller 28 may configure 104 the rinse function such that the period of time before the machine is rinsed after preparing the beverage controlled, e.g. set to a shorter period of time. Conversely, if the last produced beverage was not highly polluting, e.g. hot water, the rinse function may be configured 104 such that a planned automated rinse is skipped, in other words, the rinse scheduled to occur upon shutdown of the machine may be skipped.

In all such examples, the rinse function may be configured 104 to provide a balance between ensuring machine hygiene and beverage quality whilst minimizing water wastage and/or energy consumption, for example, energy consumption due to heating the rinsing liquid with the heater 22.

In some embodiments the controller 28 is configured to configure 104 the subsequent automated rinse function at least partly based on a beverage volume of each of the one or more initial beverages, in other words, based on the beverage volume of each of the one or more initial beverages as indicated by the user behavior data.

In this way, the configuration of the subsequent automated rinse function may be better aligned with the rinsing requirements of the beverage machine 10. This is because the volume of each of the one or more initial beverages may be indicative of future use of the beverage machine 10, e.g. may be used to predict the volume(s) of one or more beverages which may be prepared using the beverage machine 10 in the future, and therefore of how to configure 104 the subsequent automated rinse function.

Alternatively or additionally, the subsequent automated rinse function may be configured 104 based on a most frequently occurring beverage volume of the one or more initial beverages.

In this way, the rinse function may be optimized for a preferred beverage volume of the user(s).

For example, the most frequently occurring beverage volume may be the volume of the beverage which is prepared the most times over a fixed period, e.g. per day. As another example, the most frequently occurring beverage volume may be the volume of the beverage which is most often prepared first after startup of the beverage machine 10.

For example, the subsequent automated rinse function may be configured 104 based on the beverage volume of the one or more initial beverages which is most frequently prepared first following startup of the beverage machine 10.

In this way, the rinse function may be optimized for the preferred beverage volume of the user(s).

Short beverages (e.g. beverages with a volume less than 40ml) may require more pre-heating of the machine 10 to achieve a target in-cup beverage temperature, compared to long beverages (e.g. beverage with a volume greater than 40ml).

In a non-limiting illustrative example, if the obtained 102 user behavior data indicates that a particular beverage volume, e.g. a beverage with 30ml volume, is most frequently prepared first upon startup of the machine, the rinse function may be optimized towards the rinsing requirements of that particular beverage volume. In other words, if the data indicates that the most frequently prepared beverage after startup is a short beverage, the rinse function may be configured 104 to provide a longer and/or hotter pre-rinse upon startup of the beverage machine 10 than if the most frequently prepared beverage was a longer beverage. Thus, the controller 28 may, for example, configure 104 the rinse function by controlling the operation of pump 12 to set the length of time of rinsing or the operation of the heater 22 to set a temperature of the rinsing liquid. In this way, energy consumption and water usage may be better aligned with the way in which the machine is used, and the beverage quality may be improved.

Conversely, if the data indicated that the most frequently prepared beverage after startup is a long beverage, the startup rinse may be configured 104 to be shorter and/or cooler, thereby reducing energy consumption and/or water usage.

It is noted that this principle applies to beverages with different recipes. For example, a short milk-based drink, e.g. short cappuccino, may similarly require a hotter and/or longer pre-rinse than a long milk-based drink.

In some embodiments the controller 28 is configured to configure 104 the subsequent automated rinse function at least partly based on a time and/or day and/or season of preparation of each of the one or more initial beverages, in other words, based on the time and/or day and/or season of preparation of each of the one or more initial beverages as indicated by the user behavior data.

In this way, the configuration of the subsequent automated rinse function may be better aligned with the rinsing requirements of the beverage machine 10. This is because the time and/or day and/or season of preparation of each of the one or more initial beverages may be indicative of future use of the beverage machine 10, e.g. may be used to predict the time(s) and/or day(s) and/or season(s) at which one or more beverages may be prepared using the beverage machine 10 in the future, and therefore of the rinsing requirements of the beverage machine 10.

The beverage machine 10 may be used differently at different times of the day, on different days, and may be used differently depending upon the season. Thus, the controller may configure 104 the rinse function differently during different periods of time.

As a non-limiting illustrative example, the user behavior data may indicate that the beverage machine 10 is usually used to prepare espresso in the morning, but usually used to prepare latte in the afternoon. Thus, the controller 28 may configure 104 the rinse function such that the beverage machine 10 is rinsed differently upon startup in the morning than in the afternoon, for example by controlling the operation of the pump 12 and/or heater 22 and/or valves 20, 26 such that a longer and/or hotter rinse is applied when the machine switches on in the morning than when it switches on in the afternoon. In such an example, the controller 28 may also configure 104 the rinse function such that the beverage machine 10 is rinsed differently upon shutdown in the morning than the afternoon. For example, the operation of the pump(s), valve(s) and/or heater(s) may be controlled to implement more thorough rinsing in the afternoon, i.e. a longer, hotter and/or more frequent rinse, than in the morning.

It is evident from such an example, that the rinse function may be configured 104 based on any combination of the recipe(s) and/or volume(s) of the one or more initial beverages, as well as the time and/or day and/or season of preparation of each of the one or more initial beverages.

In at least some embodiments, the controller 28 is configured to configure 104 the subsequent automated rinse function at least partly based on a number of initial beverages prepared during a pre-determined period of time. In this way, the rinse function may be configured 104 to account for the frequency of use of the beverage machine 10, and/or periods of use and/or non-use.

Rinsing requirements associated with a beverage operation may vary depending upon the number of beverages which are prepared using the machine 10. For example, more thorough rinsing of the beverage machine 10 may be required if multiple beverages are prepared during a day, than if only one beverage is prepared per day. Thus, if the user behavior data indicates that that multiple beverages are prepared throughout the day, the controller 28 may configure 104 the rinse function, e.g. control the pump(s), valve(s) and/or heater(s), to implement a longer and/or hotter after rinse upon shutdown of the beverage machine 10.

In some embodiments, the controller 28 is configured to configure 104 the subsequent automated rinse function at least partly based on a time at which the beverage machine 10 switches on and/or a time at which the beverage machine 10 switches off, in other words, based on the time at which the beverage machine 10 switches on and/or off as indicated by the user behavior data.

In this way, the configuration of the subsequent automated rinse function may be better aligned with the rinsing requirements of the beverage machine 10. This is because the time at which the beverage machine 10 is switched on and/or off when preparing the one or more initial beverages may be indicative of future use of the beverage machine 10, e.g. may be used to predict the time at which the beverage machine 10 will be switched on and/or off in the future, and therefore of the rinsing requirements of the beverage machine 10.

For example, the user behavior data may indicate that the beverage machine 10 is regularly switched on and/or off at a similar time each day, e.g. the machine 10 is regularly switched on at around 7am and regularly switched off at around 2pm. In other words, the data may indicate a regular usage pattern. In particular, this may indicate a period of non-use of the beverage machine 10, such as an overnight period during which no beverages will be prepared. Thus, based on such user behavior data, the controller 28 may configure 104 a subsequent automated rinse function to ensure that the beverage machine 10 is rinsed when the machine is switched off before this anticipated period of non-use. One approach would be to control the operation of the pump 12 such that when the beverage machine 10 switches off during a particular time period, e.g. between 6pm and 6am, a shutdown rinse is automatically implemented, but not at other times, e.g. between 6am and 6pm.

In some embodiments, the controller 28 is configured to configure 104 the subsequent automated rinse function at least partly based on a number of times of switching on the beverage machine 10 and/or switching off the beverage machine 10 throughout a pre-determined period of time, in other words, based on the number of times the beverage machine 10 switches on and/or switches off throughout a pre-determined period of time as indicated by the user behavior data.

In this way, the configuration of the subsequent automated rinse function may be better aligned with the rinsing requirements of the beverage machine 10. This is because the number of times, i.e. frequency, the beverage machine 10 switches on and/or off throughout a predetermined period of time may be indicative of future use of the beverage machine 10, e.g. may be used to predict the number of times that the beverage machine 10 will switch on and/or switch off during a pre-determined period of time in the future, and therefore of the rinsing requirements of the beverage machine 10.

If the beverage machine 10 is switched on and off multiple times (e.g. 2 or more times) per day, it may not be necessary to rinse the beverage machine 10 after each time the beverage machine 10 switches off.

For example, the user behavior data may indicate that after a first switch off of the beverage machine 10, the beverage machine 10 will be switched on and used again throughout the same day. In such a scenario, the rinse function may be configured 104 by the controller 28, based on the data, to skip the automated after-rinse that would otherwise have been implemented upon first switch off.

Conversely, the user behavior data may indicate that after the machine is next switched off it will not be used again until the next day. In other words, the user behavior data indicates that there will be a period of non-use after switch off. In such a scenario, the rinse function may be configured 104, based on the data, such that the machine 10 is rinsed after switch off of the machine 10, to ensure that the beverage machine 10 is cleaned before the period of non-use.

In some embodiments, the controller 28 is configured to configure 104 the subsequent automated rinse function based on indoor and/or outdoor environmental conditions relevant to the one or more initial beverage making actions, in other words, the indoor and/or outdoor environmental conditions relevant to the one or more initial beverage making actions as indicated by the user behavior data.

In this way, the configuration of the subsequent automated rinse function may be better aligned with future use of the beverage machine 10. This is because indoor and/or outdoor environmental conditions associated with the one or more initial beverage making actions may provide an indication of future use, and of the rinsing requirements of the beverage machine 10.

The controller 28 may be configured to obtain 102 current indoor/outdoor environmental conditions data.

For example, the indoor and/or outdoor environmental conditions may include data relevant to the temperature, humidity, precipitation etc.

When current indoor and/or outdoor environmental conditions are within certain limits or exceed a threshold (e.g. a temperature threshold), the controller 28 may adjust the rinse function of the beverage machine 10.

More generally, is noted that this example, as well as all other examples given in relation to FIG. 1 are purely illustrative, and that the rinsing requirements of the beverage machine 10 may vary according to the user behavior data, including any combination of the recipe(s) and/or volume(s) of the one or more initial beverages, as well as the time and/or day and/or season of preparation of each of the one or more initial beverages, the number of initial beverages prepared, the time at which the beverage machine 10 switches on and/or off, the number of times the beverage machine 10 switches on and/or off throughout a pre-determined period of time and/or the indoor/outdoor environmental conditions. That is, the configuring 104 the subsequent automated rinse function may be based on any combination of these measures, i.e. the user behavior data.

As discussed above in relation to FIGs. 1 and 2, the controller 28 may be configured to configure 104 the subsequent automated rinse function by one or more of: setting a flow rate of the rinsing liquid, setting a temperature of the rinsing liquid, setting a volume of the rinsing liquid used to rinse the beverage machine 10, setting a length of time of rinsing the beverage machine 10, setting a time interval between a first instance of rinsing the beverage machine 10 and a second instance of rinsing the beverage machine 10, setting one or more time(s) of day of rinsing the beverage machine 10, skipping an automated rinse function that would otherwise be included in the subsequent automated sequence and directing the flow of the rinsing liquid.

To this end, the controller 28 may be configured to control the operation of the pump(s), heater(s) and/or valve(s) to configure 104 the subsequent automated rinse function in any of the above-described ways. For example, to control the operation of the pump 12, heater 22 and/or the valves 20, 26.

These techniques provide relatively straightforward ways of configuring 104 the rinse function.

The beverage machine operation may comprise preparing a beverage using the beverage machine 10 and/or changing the power status of the beverage machine 10.

For example, the changing of power status may comprise the beverage machine 10 switching on or the beverage machine 10 switching off.

In some embodiments, the subsequent automated rinse function comprises rinsing the beverage machine 10 with heated rinsing liquid to heat the liquid-contacting part(s) and/or rinsing the beverage machine 10 with non-heated rinsing liquid to rinse the liquid-contacting part(s).

In this way, heat loss from the liquid from which the beverage is prepared and/or the beverage to the beverage machine 10 may be controlled and/or the beverage machine 10 may be cleaned.

For example, the subsequent automated sequence may comprise the beverage 10 machine switching on and rinsing the beverage machine 10 with a heated and/or non-heated rinsing liquid.

Alternatively or additionally, the subsequent automated sequence may comprise the beverage machine 10 switching off and rinsing the beverage machine 10 with a heated and/or non-heated rinsing liquid.

Alternatively or additionally, the subsequent automated sequence may comprise preparing a beverage using the beverage machine 10 and rinsing the beverage machine 10 with a heated and/or non-heated rinsing liquid.

In some embodiments, the controller 28 is configured to configure 106 a power saving function of the beverage machine 10 based on the user behavior data, the power saving function automatically switching off the beverage machine 10.

In this way, the power saving function may be better aligned with the future use of the beverage machine 10. For example, the power saving function may account for periods of use and/or non-use.

The power saving function may be configured 106 to cause the beverage machine 10 to automatically switch off after a period of time, e.g. to switch off automatically 2 minutes after a beverage is prepared.

In some embodiments, the controller 28 is configured to configure 106 the power saving function by one or more of setting a time and/or day of automatically switching off the beverage machine 10, setting a time interval between preparing one or more beverages and automatically switching off the beverage machine 10 and setting a time interval between switching on the beverage machine 10 and automatically switching off the beverage machine 10.

These techniques provide relatively straightforward ways of configuring the power saving function.

In some embodiments, the controller 28 is configured to configure 106 the power saving function is at least partly based on the total number of initial beverages prepared during a pre-determined period of time and/or the time of preparing each of the one or more initial beverages, in other words, based on the total number of initial beverages prepared during a pre-determined period of time and/or the time of preparing each of the one or more initial beverages as indicated by the user behavior data.

These metrics may provide an indication of future use of the beverage machine 10, and thus how to configure 106 the power-saving function.

For example, if the user data indicates that only one beverage is usually prepared using the beverage machine 10 per day, the controller 28 may configure 106 the power saving function to switch off the beverage machine 10 immediately once the first beverage has been prepared. In other words, the time interval between preparing one or more beverages and automatically switching off the beverage machine 10 may be set, for example, to a relatively short period of time such as 10 seconds.

Alternatively or additionally, the controller 28 may configure 106 the power saving function such that the length of time between preparing a beverage and the machine 10 automatically switching off varies dynamically throughout the day. For example, if the user behavior data indicates that the beverage machine 10 is usually used to prepare one coffee in the morning, but to prepare multiple coffees in the afternoon, the length of time between preparing a beverage and switching off the machine 10 may be configured 106 to be shorter in the morning than in the afternoon.

It is noted that FIG. 2 provides a flowchart of the method 100 for configuring a rinse function of a beverage machine 10, for example a beverage machine 10 described above with reference to FIG. 1, with the beverage machine 10 having a pump 12 and a heater 22 for heating water supplied thereto by pump and/or valve operation(s) of the liquid dispensing assembly 23 for rinsing liquid contact part(s) of the liquid dispensing assembly 23.

The method 100 comprises obtaining 102 user behavior data relevant to one or more initial beverage-making actions performed by user(s) to prepare one or more initial beverages, and configuring 104, based on the user behavior data, a subsequent automated rinse function included in a subsequent automated sequence of the beverage machine 10, the subsequent automated sequence being implemented subsequently to the preparation of each of said one or more initial beverages, the subsequent automated sequence comprising a beverage machine operation in addition to said subsequent automated rinse function.

The method may also comprise configuring 106 a power saving function of the beverage machine 10 based on the user behavior data, the power saving function automatically switching off the beverage machine 10.

The method 100 may be performed using the controller 28 of the system described above.

Further provided is a computer program comprising computer program code which is configured, when the computer program is run on a controller 28, to cause the controller 28 to implement the method 100 according to any of the embodiments described herein.

The present disclosure accordingly contemplates use of software only, to bring about change in the configuration of the rinse function. Hardware changes may therefore not be required.

In particular, the software may be employed to configure 104 the rinse function, for example by using a control algorithm to adjust the pump and/or valve and/or heater operation(s) of the liquid dispensing assembly 23.

As discussed above, embodiments make use of a controller 28. The controller 28 can be implemented in numerous ways, with software and/or hardware, to perform the various functions required. A processor is one example of a controller 28 which employs one or more microprocessors that may be programmed using software (e.g., microcode) to perform the required functions. A controller 28 may however be implemented with or without employing a processor, and also may be implemented as a combination of dedicated hardware to perform some functions and a processor (e.g. one or more programmed microprocessors and associated circuitry) to perform other functions.

Examples of controller 28 components that may be employed in various embodiments of the present disclosure include, but are not limited to, conventional microprocessors, application specific integrated circuits (ASICs), and field-programmable gate arrays (FPGAs).

In various implementations, a processor or controller 28 may be associated with one or more storage media such as volatile and non-volatile computer memory such as RAM, PROM, EPROM, and EEPROM. The storage media may be encoded with one or more programs that, when executed on one or more processors and/or controllers 28, perform the required functions. Various storage media may be fixed within a processor or controller 28 or may be transportable, such that the one or more programs stored thereon can be loaded into a processor or controller 28.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a controller 28 or processor may be implemented by a single processor or by multiple separate processing units which may together be considered to constitute a "controller" or "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A method (100) for configuring a rinse function of a beverage machine (10), the rinse function rinsing liquid-contacting part(s) of the beverage machine (10) using a rinsing liquid, the method comprising:
obtaining (102) user behavior data relevant to one or more initial beverage-making actions performed by user(s) to prepare one or more initial beverages; and
configuring (104), based on the user behavior data, a subsequent automated rinse function included in a subsequent automated sequence of the beverage machine (10), the subsequent automated sequence being implemented subsequently to the preparation of each of said one or more initial beverages, the subsequent automated sequence comprising a beverage machine operation in addition to said subsequent automated rinse function.

2. The method (100) according to claim 1, wherein the configuring (104) the subsequent automated rinse function is at least partly based on a recipe of each of the one or more initial beverages.

3. The method (100) according to claim 1 or claim 2, wherein the configuring (104) the subsequent automated rinse function is at least partly based on a beverage volume of each of the one or more initial beverages.

4. The method (100) according to any of claims 1 to 3, wherein the configuring (104) the subsequent automated rinse function is at least partly based on a time and/or day and/or season of preparation of each of the one or more initial beverages.

5. The method (100) according to any of claims 1 to 4, wherein the configuring (104) the subsequent automated rinse function is at least partly based on a time at which the beverage machine (10) switches on and/or a time at which the beverage machine (10) switches off.

6. The method (100) according to any of claims 1 to 5, wherein the configuring (104) the subsequent automated rinse function is at least partly based on a number of times the beverage machine (10) switches on and/or switches off throughout a pre-determined period of time.

7. The method (100) according to any of claims 1 to 6, wherein the configuring (104) the subsequent automated rinse function is at least partly based on indoor and/or outdoor environmental conditions relevant to the one or more initial beverage making actions.

8. The method (100) according to any of claims 1 to 7, wherein the configuring (104) the subsequent automated rinse function comprises one or more of:
setting a flow rate of the rinsing liquid;
setting a temperature of the rinsing liquid;
setting a volume of the rinsing liquid used to rinse the beverage machine (10);
setting a length of time of rinsing the beverage machine (10);
setting a time interval between a first instance of rinsing the beverage machine (10) and a second instance of rinsing the beverage machine (10);
setting one or more time(s) of day of rinsing the beverage machine (10);
skipping an automated rinse function that would otherwise be included in the subsequent automated sequence; and
directing the flow of the rinsing liquid.

9. The method (100) according to any of claims 1 to 8, wherein the beverage machine operation comprises preparation of a beverage using the beverage machine (10) and/or wherein the beverage machine operation comprises changing of a power status of the beverage machine (10).

10. The method (100) according to any of claims 1 to 9, wherein the subsequent automated rinse function comprises rinsing the beverage machine (10) with heated rinsing liquid to heat the liquid-contacting part(s) and/or rinsing the beverage machine (10) with non-heated rinsing liquid to rinse the liquid-contacting part(s).

11. The method (100) according to any of claims 1 to 10, wherein the method further comprises configuring (106) a power saving function of the beverage machine (10) based on the user behavior data, the power saving function automatically switching off the beverage machine (10).

12. The method (100) according to claim 11, wherein configuring (106) the power saving function comprises one or more of:
setting a time and/or day of automatically switching off the beverage machine (10);
setting a time interval between preparing one or more beverages and automatically switching off the beverage machine (10); and
setting a time interval between switching on the beverage machine and automatically switching off the beverage machine (10).

13. The method (100) according to claim 11 or claim 12, wherein the configuring (106) the power saving function is at least partly based on the total number of initial beverages prepared during a pre-determined period of time and/or the time of preparing each of the one or more initial beverages.

14. A beverage machine (10) comprising:
a liquid dispensing assembly (23) comprising liquid-contacting part(s) contactable by rinsing liquid during a rinse function of the beverage machine (10); and
a controller (28) configured to:
obtain (102) user behavior data relevant to one or more initial beverage-making actions performed by user(s) to prepare one or more initial beverages; and
configure (104), based on the user behavior data, a subsequent automated rinse function included in a subsequent automated sequence of the beverage machine (10), the subsequent automated sequence being implemented subsequently to the preparation of each of said one or more initial beverages, the subsequent automated sequence comprising a beverage machine operation in addition to said subsequent automated rinse function.

15. A computer program comprising computer program code configured to cause a controller (28), when said code is executed on said controller (28), to execute the method (100) according to any of claims 1 to 13.
